# EUROPEAN PATENT SPECIFICATION

(11) **EP 1 942 289 B1**
(45) Date of publication and mention of the grant of the patent: **27.04.2011**
(21) Application number: 06797885.8
(22) Date of filing: 06.09.2006
(51) Int. Cl.: F16F 9/34

(54) **DAMPING FORCE GENERATING MECHANISM OF HYDRAULIC SHOCK ABSORBER**
DÄMPFUNGSKRAFTERZEUGUNGSMECHANISMUS FÜR HYDRAULISCHEN STOSSDÄMPFER
MÉCANISME GÉNÉRATEUR DE FORCE D' AMORTISSEMENT DANS UN AMORTISSEUR HYDRAULIQUE

(30) Priority: 07.09.2005 JP 2005258722
(43) Date of publication of application: 09.07.2008
(73) Proprietor: KAYABA INDUSTRY CO., LTD., Minato-ku, Tokyo 105-6190 (JP)
(72) Inventor: OTA, Akihisa, Tokyo 105-6190 (JP)
(74) Representative: Grünecker, Kinkeldey, Stockmair & Schwanhäusser Anwaltssozietät
(86) International application number: PCT/JP2006/318093
(87) International publication number: WO 2007/029861

(56) References cited:
- DE-U1- 7 725 888
- JP-A- 11 336 894
- JP-A- 51 144 865
- JP-A- 59 133 844
- JP-B2- 3 660 857
- JP-U- 04 058 614
- JP-U- 50 059 488
- JP-U- 52 026 059
- JP-U- 55 074 857
- US-A- 2 648 405
- US-A- 3 756 357
- US-A1- 2001 032 763

## Description

### TECHNICAL FIELD OF THE INVENTION

This invention relates to a hydraulic shock absorber used in a suspension device for a vehicle such as an automobile, and more particularly to a damping force generating mechanism employing a leaf valve provided on a piston of the hydraulic shock absorber.

### BACKGROUND OF THE INVENTION

Japanese Patent No. 3,660,857 published by the Japan Patent Office discloses a damping force generating mechanism employing a leaf valve that is annexed to a piston in a hydraulic shock absorber used in a suspension device for a vehicle such as an automobile. The damping force generating mechanism is provided with the aim of improving riding comfort and maneuvering stability by appropriately alleviating vibration that is transmitted to the vehicle body from a road surface as the vehicle travels.

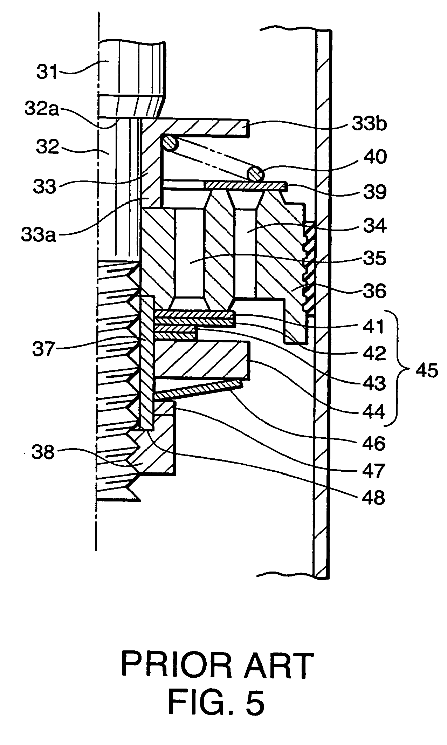

Referring to FIG. 5, this damping force generating mechanism will be described.

A piston rod 31 of a hydraulic shock absorber comprises a small-diameter piston attachment portion 32 on a tip end thereof, which is inserted into a cylinder. A male screw portion is formed on a tip end of the piston attachment portion 32.

A retainer 33, a piston 36 comprising ports 34 and 35, and a spacer 37 are stacked on the piston attachment portion 32 via attachment holes formed in the respective centers thereof. By tightening a nut 38 onto the male screw portion below the spacer 37, the retainer 33, piston 36 and spacer 37 are held fixedly between the nut 38 and a step 32a formed on a base end of the piston attachment portion 32.

A contraction damping force generating valve 39 is disposed between the retainer 33 and the piston 36 so as to face an opening portion of the port 34. The contraction damping force generating valve 39 is a ring-shaped leaf valve that is fitted to an outer periphery of the retainer 33 via an attachment hole formed in its center so as to be free to slide axially. The retainer 33 comprises a flange 33b, and the contraction damping force generating valve 39 holds the port 34 in an elastically closed state by means of a spring 40 supported by the flange 33b.

An expansion damping force generating valve 45 is supported between the piston 36 and the nut 38 so as to face an opening portion of the port 35. The expansion damping force generating valve 45 is a ring-shaped leaf valve comprises a bleed disk 41, a valve disk 42, a spacer disk 43 and a support disk 44. These members are fitted to an outer periphery of the spacer 37 via attachment holes formed in the respective centers thereof so as to be free to slide axially. A plate spring 46 that biases the expansion damping force generating valve 45 toward the piston 36 is sandwiched between the expansion damping force generating valve 45 and the nut 38 via a shim 47.

When the piston rod 31 contracts, the piston 36 displaces downward in the drawing such that working oil in an oil chamber on a lower side of the piston 36 causes the contraction damping force generating valve 39 to slide upward in the drawing against the spring 40 via the port 34. At this time, a valve opening resistance of the contraction damping force generating valve 39 generates a damping force which acts on the contraction operation of the piston rod 31.

When the piston rod 31 expands, the piston 36 displaces upward in the drawing such that working oil in an oil chamber on an upper side of the piston 36 causes the bleed disk 41 of the expansion damping force generating valve 45 to slide downward in the drawing against the plate spring 46 via the port 35. At this time, the valve opening resistance of the expansion damping force generating valve 45 generates a damping force which acts on the expansion operation of the piston rod 31.

The damping force generating valves 39, 45 and the piston 36 are assembled in the following manner.

The piston rod 31 is supported in an inverted state such that the tip end of the piston attachment portion 32 is oriented upward, and the piston attachment portion 32 is inserted sequentially into the respective attachment holes of the retainer 33, the spring 40, the contraction damping force generating valve 39, the piston 36 and the spacer 37.

Next, the expansion damping force generating valve 45, the plate spring 46 and the shim 47 are attached respectively to the outer periphery of the

### SUMMARY OF THE INVENTION

When the expansion damping force generating valve 45, plate spring 46 and shim 47 are attached to the outer periphery of the spacer 37, these members have to negotiate a step 48 corresponding to the thickness of the spacer 37, and if any one of the expansion damping force generating valve 45, plate spring 46 and shim 47 is offset relative to the spacer 37 when the piston attachment portion 32 is inserted into the respective attachment holes of the expansion damping force generating valve 45, plate spring 46 and shim 47, that member becomes caught on the step 48. Hence, when attaching these members, concentricity with the spacer 37 must be maintained, and as a result, a reduction in the efficiency of the assembly operation is inevitable.

Further, in this damping force generating mechanism, the expansion damping force generating valve 45, plate spring 46 and shim 47 are disposed on the outer side of the male screw portion, and therefore the male screw portion must be covered by the spacer 37. With this structure, if an attempt is made to increase the diameter of the ports 34 and 35, the diameter of the piston attachment portion 32 must be reduced.

If the diameter of the piston attachment portion 32 is small in a case where the damping force generated by the valve is made adjustable by making the interior of the piston attachment portion 32 hollow and inserting a control rod into the hollow interior, it becomes impossible to insert a large-diameter control rod into the piston attachment portion 32 for reasons of strength.

Hence, the damping force generating mechanism of the prior art has little design freedom.

It is therefore an object of this invention to provide a damping force generating mechanism for a hydraulic shock absorber which is easy to assemble and has a large degree of design freedom.

In order to achieve the above object, this invention provides a shock absorber according to claim 1.

The details as well as other features and advantages of this invention are set forth in the remainder of the specification and are shown in the accompanying drawings.

### BRIEF DESCRIPTION OF THE DRAWINGS

FIG. 1 is a longitudinal sectional view of a damping force generating mechanism according to this invention.
FIG. 2 is a side view of the main parts of a piston rod when a piston attachment portion is oriented upward.
FIG. 3 is a longitudinal sectional view of a piston and a contraction damping force generating valve attached to the piston rod shown in FIG. 2.
FIG. 4 is a longitudinal sectional view of a damping force generating mechanism according to another embodiment of this invention.
FIG. 5 is a longitudinal sectional view showing the main parts of a damping force generating mechanism according to the prior art.

### DESCRIPTION OF THE PREFERRED EMBODIMENTS

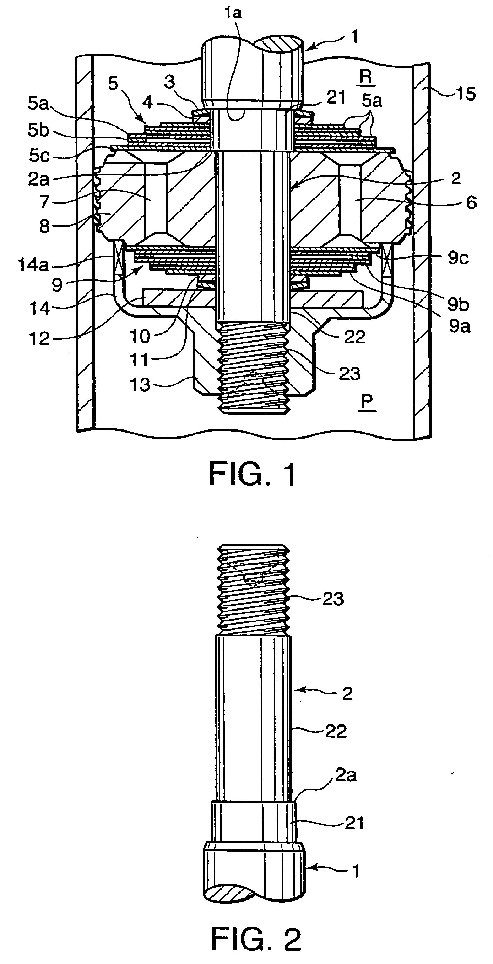

Referring to FIG. 1 of the drawings, a damping force generating mechanism of a hydraulic shock absorber for a vehicle is provided on an outer periphery of a small-diameter piston attachment portion 2 formed on a tip end of a piston rod 1, which is inserted into a cylinder 15, via a step 1a.

Referring to FIG. 2, the piston attachment portion 2 is constituted by a base end portion 21, an intermediate portion 22, and a tip end male screw portion 23. The base end portion 21 is formed with a slightly larger diameter than the intermediate portion 22. A step 2a is formed between the base end portion 21 and the intermediate portion 22.

Returning to FIG. 1, a contraction damping force generating valve 5 is provided on an outer periphery of the base end portion 21. A piston 8 and an expansion damping force generating valve 9 are provided on an outer periphery of the intermediate portion 22. A nut 13 is tightened onto the male screw portion 23.

The interior of the cylinder 15 is divided by the piston 8 into an oil chamber P that contracts when the piston rod 1 contracts and expands when the piston rod 1 expands, and an oil chamber R that contracts when the piston rod 1 expands and expands when the piston rod 1 contracts. Ports 6 and 7 that connect the oil chamber P and the oil chamber R are formed in the piston 8.

The contraction damping force generating valve 5 comprises a leaf 5c contacting the piston 8, a plurality of leaves 5a having different diameters, which are stacked on the leaf 5c, and a plate spring 3 that elastically supports the leaves 5a, 5c in the direction of the piston 8 via a shim 4.

The contraction damping force generating valve 5 causes working oil to flow out of the port 6 into the oil chamber R by elastically deforming an outer peripheral portion of the leaf 5c, which has the largest diameter and faces the port 6, in accordance with a pressure increase in the port 6, or in other words displacement of the piston 8 in a contraction direction of the piston rod 1. A ring member 5b is sandwiched between the leaves 5a. The leaf 5c deforms elastically in accordance with the balance between an initial load applied by the ring member 5b and the working oil pressure in the port 6. The amount by which the outer peripheral portion of the leaf 5c deforms increases as the pressure of the port 6 rises, or in other words as the displacement speed of the piston 8 increases, and the flow sectional area of the working oil increases accordingly. However, there is a limit to the deformation, and therefore the flow sectional area does not increase beyond a fixed level.

To ensure that the generated damping force does not become excessive even when the piston 8 displaces at high speed, the plate spring 3 deforms elastically when the pressure of the port 6 increases to or above a fixed level such that all of the leaves 5a, 5c are displaced upward in the drawing along the piston attachment portion 2. As a result of this displacement, the contraction damping force generating valve 5 increases the working oil flow area greatly, and thus the generated damping force is maintained at an appropriate level even when the piston 8 displaces at high speed.

The plate spring 3, the shim 4 and the leaves 5a, 5c all comprise an attachment hole that fits onto the outer periphery of the base end portion 21 in the central portions thereof, and by inserting the piston attachment portion 2 into these attachment holes, the members are attached to the outer periphery of the base end portion 21.

The piston 8 is fitted onto the outer periphery of the intermediate portion 22. Accordingly, the contraction damping force generating valve 5 is sandwiched between the piston 8 contacting the step 2a and the step 1a of the piston rod 1 so as to be held in a closed state under a constant initial load.

The expansion damping force generating valve 9 is constituted substantially similarly to the contraction damping force generating valve 5.

More specifically, the expansion damping force generating valve 9 comprises a leaf 9c contacting the piston 8, a plurality of leaves 9a having different diameters, which are stacked on the leaf 9c, and a plate spring 11 that elastically supports the leaves 9a, 9c in the direction of the piston 8 via a shim 10. A ring member 9b is sandwiched between the leaves 9a. The expansion damping force generating valve 9 also comprises a spacer 12 that supports the plate spring 11.

The expansion damping force generating valve 9 causes working oil to flow out of the port 7 into the oil chamber P by elastically deforming an outer peripheral portion of the leaf 9c in accordance with a pressure increase in the port 7, or in other words displacement of the piston 8 in an expansion direction of the piston rod 1. Further, the plate spring 11 deforms elastically when the pressure of the port 7 increases to or above a fixed level such that all of the leaves 9a, 9c are displaced downward in the drawing along the piston attachment portion 2. As a result of this displacement, the expansion damping force generating valve 9 increases the working oil flow area greatly, and thus the generated damping force is maintained at an appropriate level even when the piston 8 displaces at high speed.

The expansion damping force generating valve 9 is sandwiched between the nut 13 that is screwed to the male screw portion 23 and the piston 8 contacting the step 2a.

Of the ports 6 and 7 in the piston 8, the port 6 is blocked by the contraction damping force generating valve 5 in a normal state and thereby prevented from communicating with the oil chamber R, but communicates with the oil chamber P at all times via a notch formed in the piston 8. The port 7 is blocked by the expansion damping force generating valve 9 in a normal state and thereby prevented from communicating with the oil chamber P, but communicates with the oil chamber R at all times via a notch formed in the piston 8.

The contraction damping force generating valve 5 is held in a fixed space formed by the step 1a and the piston 8 contacting the step 2a, and thus exhibits a stable damping force characteristic at all times. Meanwhile, the expansion damping force generating valve 9 is held in a space formed by the nut 13 and the piston 8. Therefore, to ensure that the expansion damping force generating valve 9 exhibits a stable damping force characteristic, the distance between the nut 13 and the piston 8 defining this space must be kept constant.

This embodiment comprises a tubular body 14 that extends from the outer periphery of the nut 13 toward the piston 8 and serves as a defining member for keeping the distance between the nut 13 and the piston 8 constant. The tubular body 14 is formed integrally with the nut 13, and a tip end thereof contacts the piston, thereby keeping the distance between the nut 13 and the piston 8 constant. The tubular body 14 is formed with a plurality of through-holes 14a. The working oil in the oil chamber P flows through the through-holes 14a to the inside and outside of the tubular body 14 without resistance.

By employing the tubular body 14 to keep the distance between the nut 13 and the piston 8 constant, the expansion damping force generating valve 9 exhibits a stable damping force characteristic at all times, similarly to the contraction damping force generating valve 5.

As shown in FIG. 2, when incorporating the damping force generating valves into a hydraulic shock absorber, the piston rod 1 is disposed such that the tip end of the piston attachment portion 2 is oriented upward.

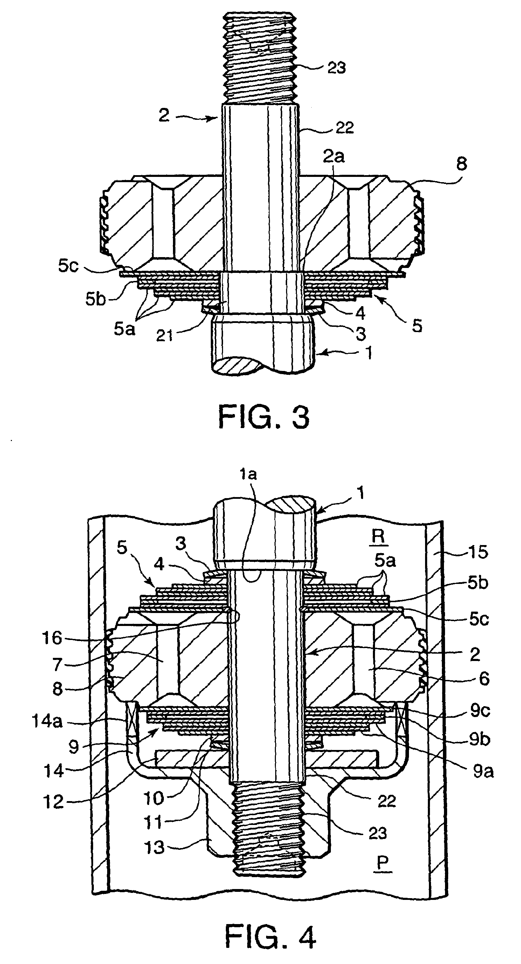

Next, as shown in FIG. 3, the plate spring 3, shim 4, leaves 5a, 5c, and piston 8 are stacked sequentially on the piston attachment portion 2 while inserting the piston attachment portion 2 into the attachment hole of each member. The ring member 5b is welded to the leaves 5a in advance.

Next, the leaves 9a, 9c, shim 10, plate spring 11, and spacer member 12 are stacked sequentially on the piston attachment portion 2 while inserting the piston attachment portion 2 into the attachment hole of each member. The ring member 9b is welded to the leaves 9a in advance.

Finally, the nut 13 is screwed to the male screw portion 23, and the nut 13 is tightened onto the male screw portion 23 until the tip end of the tubular body 14 on the outer periphery of the nut 13 comes into contact with the piston 8. As shown in FIG. 1, through this operation the distance between the step 1a and the piston 8 and the distance between the nut 13 and the piston 8 are both kept constant. Thus, attachment of the contraction damping force generating valve 5, the piston 8, and the expansion damping force generating valve 9 to the piston attachment portion 2 is complete.

As described above, in this embodiment the distance between the nut and the piston is defined by a defining member disposed on the outer side of the expansion damping force generating valve instead of defining the distance between the nut and the piston using a spacer disposed on the inner side of the expansion damping force generating valve, as in the prior art.

Hence, since the step of the spacer does not exist, the various members of the expansion damping force generating valve 9 can be attached to the piston attachment portion 2 more easily than in the prior art. Furthermore, since the defining member is disposed on the outer side of the expansion damping force generating member 9, the diameter of the ports 6 and 7 can be enlarged without varying the diameter of the piston attachment portion 2. As a result, a damping force generating mechanism exhibiting a high degree of design freedom can be obtained by means of this invention.

Next, referring to FIG. 4, a second embodiment of this invention will be described.

In this embodiment, a ring member 16 is latched to a predetermined position of the piston attachment portion 2 instead of forming the step 2a on the piston attachment portion 2. A snap ring, for example, may be used as the ring member 16. The piston 8 contacts the ring member 16, thereby keeping the distance to the step 1a of the piston rod 1 constant.

According to this embodiment, the step 2a is not formed on the piston attachment portion 2, and therefore the amount of processing performed on the piston attachment portion 2 can be reduced.

Although the invention has been described above with reference to certain embodiments of the invention, the invention is not limited to the embodiments described above. Modifications and variations of the embodiments described above will occur to those skilled in the art, within the scope of the claims.

For example, in the embodiments described above, the tubular body 14 formed integrally with the nut 13 is used as the defining member, but the tubular body 14 may be formed independently of the nut 13 as a tubular spacer that is sandwiched between a flange formed on the nut 13 and the piston 8. Alternatively, instead of the tubular body 14, a plurality of arm-shaped members may be extended toward the piston 8 from the nut 13.

Each of the embodiments described above relates to a case in which the damping force generating mechanism is applied to a single cylinder hydraulic shock absorber, but the damping force generating mechanism according to this invention may also be applied to a multi-cylinder hydraulic shock absorber.

### INDUSTRIAL APPLICABILITY

The damping force generating mechanism according to the invention described above is easily incorporated into a hydraulic shock absorber and has an increased degree of design freedom. Therefore, particularly favorable effects can be obtained when the damping force generating mechanism is applied to a hydraulic shock absorber for a suspension device of a vehicle, in which various characteristics are required.

## Claims

1. A hydraulic shock absorber comprising:
a cylinder (15);
a piston rod (1) inserted into the cylinder (15) from an axial direction;
a piston (8) fixed to a tip end of the piston rod (1) within the cylinder (15), wherein the piston rod (1) penetrates the piston (8), an oil chamber (R) that contracts in accordance with an expansion operation of the piston rod (1) is defined by the piston (8) within the cylinder (15), and a port (7) through which working oil in the oil chamber (R) flows out in accordance with the expansion operation of the piston rod (1) is formed in vertical alignment with the piston (8);
an expansion damping force generating valve (9) that applies a resistance to the outflow of the working oil through the port (7), the expansion damping force generating valve (9) being disposed on an opposite side of the piston (8) to the oil chamber (R);
a nut (13) that is screwed to a tip end (23) of the piston rod (1) penetrating the piston (8) such that the nut (13) and the piston (8) sandwiches the expansion damping force generating valve (9), **characterised by**
a defining member (14) that is disposed on an outer side of the expansion damping force generating valve (9) to keep a distance between the nut (13) and the piston (8) constant,
wherein the expansion damping force generating valve (9) comprises a leaf (9a, 9c) that faces an outlet of the port (7), and a spring (11) that elastically supports the leaf (9a, 9c) on the nut (13).

2. The hydraulic shock absorber as defined in claim 1, wherein the defining member (14) is constituted by a tubular body formed integrally with the nut (13), which extends from an outer periphery of the nut (13) toward the piston (8), the tubular body having a through-hole (14a) that connects an inner side and an outer side of the tubular body.

3. The hydraulic shock absorber as defined in claim 1 or claim 2, wherein the piston rod (1) comprises a step (2a) that contacts the piston (8) so as to position the piston (8) on the piston rod (1) in the axial direction.

4. The hydraulic shock absorber as defined in claim 1 or claim 2, wherein a ring member (16) that contacts the piston (8) so as to position the piston (8) on the piston rod (1) in the axial direction is latched to the piston rod (1).

5. The hydraulic shock absorber as defined in claim 1, wherein the spring (11) is constituted by a plate spring.

6. The hydraulic shock absorber as defined in any one of claim 1 through claim 5, wherein a second oil chamber (P) that contracts in accordance with a contraction operation of the piston rod (1) is defined by the piston (8) on an opposite side of the first oil chamber (R) within the cylinder (15),
a second port (6) that causes working oil in the second oil chamber (R) to flow out into the first oil chamber (R) in accordance with the contraction operation of the piston rod (1) is formed vertically through the piston (8), and
the hydraulic shock absorber further comprises a contraction damping force generating valve (5) having a second leaf (5a, 5c) that faces an outlet of the second port (6), and a second spring (3) that elastically supports the second leaf (5a, 5c).

7. The hydraulic shock absorber as defined in claim 6, wherein the second spring (3) is constituted by a plate spring.

8. The hydraulic shock absorber as defined in claim 7, wherein the piston rod (1) comprises a second step (1a) that supports the second spring (3).

## Patentansprüche

1. Hydraulischer Stoßdämpfer, der umfasst:
einen Zylinder (15);
eine Kolbenstange (1), die aus einer axialen Richtung in den Zylinder (15) eingeführt ist;
einen Kolben (8), der an einem vorderen Ende der Kolbenstange (1) im Inneren des Zylinders (15) befestigt ist, wobei die Kolbenstange (1) in den Kolben (8) eindringt, eine ÖIkammer (R), die sich entsprechend einem Vorgang des Ausfahrens der Kolbenstange (1) verkleinert, durch den Kolben (8) im Inneren des Zylinders (15) gebildet wird, und eine Öffnung (7), über die Arbeitsöl in der Ölkammer (R) entsprechend dem Vorgang des Ausfahrens der Kolbenstange (1) ausströmt, in vertikaler Ausrichtung auf den Kolben (8) ausgebildet ist;
ein Ventil (9) zum Erzeugen von Ausfahr-Dämpfkraft, die dem Ausströmen des Arbeitsöls über die Öffnung (7) einen Widerstand entgegen setzt, wobei das Ventil (9) zum Erzeugen von Ausfahr-Dämpfkraft an einer der Ölkammer (R) gegenüberliegenden Seite des Kolbens (8) angeordnet ist;
eine Mutter (13), die auf ein vorderes Ende (23) der Kolbenstange (1) aufgeschraubt ist, die in den Kolben (8) eindringt, so dass die Mutter (13) und der Kolben (8) das Ventil (9) zum Erzeugen von Ausfahr-Dämpfkraft einschließen, **gekennzeichnet durch**
ein Begrenzungselement (14), das an einer Außenseite des Ventils (9) zum Erzeugen von Ausfahr-Dämpfkraft angeordnet ist, um einen Abstand zwischen der Mutter (13) und dem Kolben (8) konstant zu halten,
wobei das Ventil (9) zum Erzeugen von Ausfahr-Dämpfkraft ein Federblatt (9a, 9c), das einem Auslass der Öffnung (7) zugewandt ist, sowie eine Feder (11) umfasst, die das Federblatt (9a, 9c) elastisch auf der Mutter (13) trägt.

2. Hydraulischer Stoßdämpfer nach Anspruch 1, wobei das Begrenzungselement (14) durch einen röhrenförmigen Körper gebildet wird, der integral mit der Mutter (13) ausgebildet ist und sich von einem Außenumfang der Mutter (13) auf den Kolben (8) zu erstreckt, und der röhrenförmige Körper ein Durchgangsloch (14a) hat, das eine Innenseite und eine Außenseite des röhrenförmigen Körpers verbindet.

3. Hydraulischer Stoßdämpfer nach Anspruch 1 oder Anspruch 2, wobei die Kolbenstange (1) einen Absatz (2a) umfasst, der mit dem Kolben (8) so in Kontakt kommt, dass der Kolben (8) in der axialen Richtung an der Kolbenstange (1) positioniert wird.

4. Hydraulischer Stoßdämpfer nach Anspruch 1 oder Anspruch 2, wobei ein Ringelement (16), das mit dem Kolben (8) so in Kontakt kommt, dass der Kolben (8) in der axialen Richtung an der Kolbenstange (1) positioniert wird, an der Kolbenstange (1) arretiert ist.

5. Hydraulischer Stoßdämpfer nach Anspruch 1, wobei die Feder (11) durch eine Blattfeder gebildet wird.

6. Hydraulischer Stoßdämpfer nach einem der Ansprüche 1 bis 5, wobei eine zweite Ölkammer (P), die sich entsprechend einem Vorgang des Einziehens der Kolbenstange (1) verkleinert, durch den Kolben (8) an einer der ersten Ölkammer (R) gegenüberliegenden Seite im Inneren des Zylinders (15) gebildet wird,
eine zweite Öffnung (6), die bewirkt, dass Arbeitsöl in der zweiten Ölkammer (R) entsprechend dem Vorgang des Einziehens der Kolbenstange (1) in die erste Ölkammer (R) ausströmt, vertikal durch den Kolben (8) hindurch ausgebildet ist, und
der hydraulische Stoßdämpfer des Weiteren ein Ventil (5) zum Erzeugen von Einzieh-Dämpfkraft umfasst, das ein zweites Federblatt (5a, 5c), das einem Auslass der zweiten Öffnung (6) zugewandt ist, sowie eine zweite Feder (3) aufweist, die das zweite Federblatt (5a, 5c) elastisch trägt.

7. Hydraulischer Stoßdämpfer nach Anspruch 6, wobei die zweite Feder (3) durch eine Blattfeder gebildet wird.

8. Hydraulischer Stoßdämpfer nach Anspruch 7, wobei die Kolbenstange (1) einen zweiten Absatz (1a) umfasst, der die zweite Feder (3) trägt.

## Revendications

1. Amortisseur hydraulique comprenant :
un cylindre (15) ;
une tige de piston (1) introduite dans le cylindre (15) depuis une direction axiale ;
un piston (8) fixé à une extrémité pointue de la tige de piston (1) à l'intérieur du cylindre (15), dans lequel la tige de piston (1) s'introduit dans le piston (8), une chambre d'huile (R) qui se contracte conformément à une opération d'expansion de la tige de piston (1) est délimitée par le piston (8) à l'intérieur du cylindre (15) et un orifice (7), par lequel l'huile de travail de la chambre d'huile (R) s'écoule conformément à l'opération d'expansion de la tige de piston (1), est formé dans l'alignement vertical du piston (8) ;
une soupape génératrice de force d'amortissement d'expansion (9) qui applique une résistance à l'écoulement de l'huile de travail à travers l'orifice (7), ladite soupape (9) étant disposée du côté opposé au piston (8) de la chambre d'huile (R) ;
un écrou (13) qui est vissé à une extrémité pointue (23) de la tige de piston (1) s'introduisant dans le piston (8) de sorte que l'écrou (13) et le piston (8) intercalent la soupape génératrice de force d'amortissement d'expansion (9), **caractérisé par**
un élément de délimitation (14) qui est disposé sur un côté externe de la soupape génératrice de force d'amortissement d'expansion (9) afin de maintenir constante la distance entre l'écrou (13) et le piston (8),
dans lequel la soupape génératrice de force d'amortissement d'expansion (9) comprend une lamelle (9a, 9c) en regard d'une sortie de l'orifice (7), et un ressort (11) qui supporte élastiquement la lamelle (9, 9c) sur l'écrou (13).

2. Amortisseur hydraulique conformément à la revendication 1, dans lequel l'élément de délimitation (14) est constitué d'un corps tubulaire formé d'un seul tenant avec l'écrou (13), qui s'étend d'une périphérie externe de l'écrou (13) vers le piston (8), le corps tubulaire comprenant un trou traversant (14a) qui relie un côté interne et un côté externe du corps tubulaire.

3. Amortisseur hydraulique conformément à la revendication 1 ou 2, dans lequel la tige de piston (1) comprend un étage (2a) qui entre en contact avec le piston (8) de manière à positionner le piston (8) sur la tige de piston (1) dans la direction axiale.

4. Amortisseur hydraulique conformément à la revendication 1 ou à la revendication 2, dans lequel un élément annulaire (16), qui entre en contact avec le piston (8) de manière à positionner le piston (8) sur la tige de piston (1) dans la direction axiale, est verrouillé sur la tige de piston (1).

5. Amortisseur hydraulique conformément à la revendication 1, dans lequel le ressort (11) est constitué d'un ressort à lames.

6. Amortisseur hydraulique conformément à l'une quelconque des revendications 1 à 5, dans lequel une seconde chambre d'huile (P) qui se contracte conformément à une opération de contraction de la tige de piston (1) est délimitée par le piston (8), sur un côté opposé de la première chambre d'huile (R) à l'intérieur du cylindre (15),
un second orifice (6) qui amène l'huile de travail de la seconde chambre d'huile (R) à s'écouler hors de celle-ci pour entrer dans la première chambre (R) conformément à l'opération de contraction de la tige de piston (1) est formé verticalement à travers le piston (8), et
l'amortisseur hydraulique comprend en outre une soupape génératrice de force d'amortissement de contraction (5) comprenant une seconde lamelle (5a, 5c) en regard d'une sortie du second orifice (6), et un second ressort (3) qui supporte élastiquement la seconde lamelle (5a, 5c).

7. Amortisseur hydraulique conformément à la revendication 6, dans lequel le second ressort (3) est constitué d'un ressort à lames.

8. Amortisseur hydraulique conformément à la revendication 7, dans lequel la tige de piston (1) comprend un second étage (1a) qui supporte le second ressort (3).
